# EUROPEAN PATENT APPLICATION

(11) **EP 4 661 274 A1**
(43) Date of publication of application: **10.12.2025**
(21) Application number: 24180859.1
(22) Date of filing: 07.06.2024
(51) Int. Cl.: H02M 5/16, H02M 5/22, H02M 7/12, H02M 1/42, H02M 1/44, H02M 5/293, H02M 5/297, H02M 7/217

(54) **CONTROLLING A POWER CONVERTER**

(71) Applicant: Infineon Technologies Austria AG, 9500 Villach (AT)
(72) Inventor: PACINI, Alex, 9500 Villach (AT); KASPER, Matthias Joachim, 9500 Villach (AT)
(74) Representative: Elkington and Fife LLP

(57) **Abstract**

A controller for a power converter, and a method for operating a power converter is provided. The power converter comprises a switching circuit configured to receive alternating input voltages, and having switches connected to respective alternating input voltages and controllable to generate an alternating intermediate voltage. Furthermore, the power converter comprises a transmitter and rectifier circuit. For each period of the alternating intermediate voltage, the control scheme comprises the identification with the greatest and second alternating input voltages or greatest and second greatest line-to-line voltages, and then controlling the switching circuit to generate the alternating intermediate voltage based on the identified voltages. The length of the period of the alternating intermediate voltage is then adjusted for subsequent periods of the alternating intermediate voltage based at least in part on a measured value of the output voltage. Accordingly, an output control variable of the power converter (e.g., output voltage, output current, output power) may have a reduced ripple, and thus the power converter may be compatible with variable power loads.

## Description

### FIELD OF THE INVENTION

This invention relates in general to power converters. In particular, it relates to controllers and methods for controlling a power converter.

### BACKGROUND OF THE INVENTION

Generally, a power converter is configured to generate an output voltage based on a plurality of alternating input voltages (typically three), each received at a respective input. Power converters are widely used in various kinds of power conversion applications. Examples of such applications include on-board chargers that are configured to charge a battery of a vehicle, or power supplies for lighting, telecommunication, or computer server applications. Power density and efficiency are essential characteristics for such applications.

To achieve target power densities and efficiencies, there are multiple challenges. One challenge is the use of two conversion stages, one for the power factor correction (PFC), and another for the isolated DC/DC conversion, both adding losses and volume to the overall power supply. Secondly, power converters rely heavily on the usage of electrolytic capacitors and PFC inductors as energy storage elements, both of which are bulky and heavy. Furthermore, electrolytic capacitor failures are the main lifetime limiting effect in these converters.

A recently proposed solution to this problem is the removal of the electrolytic DC link capacitor and the PFC inductors. This has provided power converters in the form of cyclo-converters. However, this type of power converter requires complex control schemes to ensure suitable operation.

### SUMMARY OF THE INVENTION

According to one aspect of the invention, there is provided a controller for a power converter.

The power converter comprises a switching circuit, comprising three switches and three DC-block capacitors. Each switch is connected between a respective input node and a high side common node, and each respective input node configured to receive a respective alternating input voltage. Each DC-block capacitors are connected between a respective one of the input nodes and a low side common node. The switches are controlled to generate an alternating intermediate voltage across the high side common node and the low side common node based on the received alternating input voltages. The power converter further comprises a transmitter circuit configured to receive the alternating intermediate voltage, and to generate a further alternating input voltage based on the alternating intermediate voltage, and a rectifier circuit configured to receive the further alternating input voltage, and to generate an output voltage based on the alternating intermediate voltage.

The controller is configured, for each period of the alternating intermediate voltage, to:
identify the alternating input voltage with the greatest magnitude as a first voltage;
identify the alternating input voltage with the second greatest magnitude as a second voltage;
control the switches of the switching circuit to generate the alternating intermediate voltage such that the alternating intermediate voltage is substantially equal to the first voltage for a first time duration of the period and is substantially equal to the second voltage for a second time duration of the period; and
adjust a length of the period of the alternating intermediate voltage for subsequent periods of the alternating intermediate voltage based at least in part on a measured value of the output voltage.

Furthermore, according to another aspect of the invention, there is provided a method for controlling the above-described power converter. The method comprises, for each period of the alternating intermediate voltage:
identifying the alternating input voltage with the greatest magnitude as a first voltage;
identifying the alternating input voltage with the second greatest magnitude as a second voltage;
controlling the switches of the switching circuit to generate the alternating intermediate voltage such that the alternating intermediate voltage is substantially equal to the first voltage for a first time duration of the period and is substantially equal to the second voltage for a second time duration of the period; and
adjusting a length of a period of the alternating intermediate voltage for subsequent periods of the alternating intermediate voltage based at least in part on a measured value of the output voltage.

According to another aspect of the invention, there is provided a controller for a power converter.

In this case, the power converter comprises a switching circuit, comprising three high side switches and three low side switches. Each high side switch is connected between a respective input node and a high side common node, with each respective input node configured to receive a respective alternating input voltage. Each low side switch is connected between a respective one of the input nodes and a low side common node. The switches are controlled to generate an alternating intermediate voltage across the high side common node and the low side common node based on the received alternating input voltages. The power converter further comprises a transmitter circuit configured to receive the alternating intermediate voltage, and to generate a further alternating input voltage based on the alternating intermediate voltage, and a rectifier circuit configured to receive the further alternating input voltage, and to generate an output voltage based on the alternating intermediate voltage.

The controller is configured, for each period of the alternating intermediate voltage, to:
identify a greatest line-to-line voltage between the alternating input voltages as a first voltage;
identify a second greatest line-to-line voltage between the alternating input voltages as a second voltage;
control the switches of the switching circuit to generate the alternating intermediate voltage such that a magnitude of the alternating intermediate voltage is substantially equal to the magnitude of the first voltage for a first time duration of the period and is substantially equal to the magnitude of the second voltage for a second time duration of the period; and
adjust a length of the period of the alternating intermediate voltage for subsequent periods of the alternating intermediate voltage based at least in part on a measured value of the output voltage.

Additionally, according to a further aspect of the invention, there is provided a method for controlling the above-described power converter. The method comprises, for each period of the alternating intermediate voltage:
identifying a greatest line-to-line voltage between the alternating input voltages as a first voltage;
identifying a second greatest line-to-line voltage between the alternating input voltages as a second voltage;
controlling the switches of the switching circuit to generate the alternating intermediate voltage such that a magnitude of the alternating intermediate voltage is substantially equal to the magnitude of the first voltage for a first time duration of the period and is substantially equal to the magnitude of the second voltage for a second time duration of the period; and
adjusting a length of the period of the alternating intermediate voltage for subsequent periods of the alternating intermediate voltage based at least in part on a measured value of the output voltage.

The proposed controllers and methods enable the adjustment of the frequency of switching of a switching circuit based on a measured value of the output voltage of the power converter. Without this feedback control, the output control variable of the power converter (e.g., output voltage, output current, output power) may exhibit a ripple. Due to the constant power flow requirements of balanced three phase systems, the presence of a ripple at the output means that the power converter is only compatible with constant power loads. However, with the control of the length of the period of the alternating intermediate voltage, there is provided a two-fold benefit of a reduction of the output ripple, and of extending the compatibility with additional sources, as resistive, or constant current or voltage. That is, the feedback control enables efficient operation of the power converter for non-constant power loads (i.e., a load that actively controls its power in order to be constant, such that given a certain voltage or current, it will set the respective current or voltage absorption such that the power is constant).

Those skilled in the art will recognize additional features and advantages upon reading the following detailed description, and upon viewing the accompanying drawings.

### BRIEF DESCRIPTION OF THE DRAWINGS

The invention will now be described by way of example with reference to the accompanying drawings, in which:
Fig. 1 is a circuit diagram showing a power converter according to a generalized example;
Fig. 2 is a circuit diagram of a power converter including a half-bridge switching circuit according to an embodiment of the invention;
Fig. 3 is a graph depicting waveforms of alternating input voltages and associated identified rankings of magnitudes of the voltages;
Fig. 4 is a schematic diagram of a waveform of the alternating intermediate voltage according to a control scheme of the power converter;
Figs. 5-7 present waveforms of the power converter operating according to a control scheme of the present invention;
Fig. 8 is a circuit diagram of a power converter including a full-bridge switching circuit according to another embodiment of the invention;
Fig. 9 is a graph depicting waveforms of line-to-line voltages and associated identified rankings of magnitudes of the line-to-line voltages; and
Fig. 10 is a schematic diagram of a waveform of the alternating intermediate voltage according to a control scheme of the power converter.

It should be noted that these figures are diagrammatic and not drawn to scale. Relative dimensions and proportions of parts of these figures have been shown exaggerated or reduced in size, for the sake of clarity and convenience in the drawings.

### DETAILED DESCRIPTION

A controller for a power converter, and a method for operating a power converter is provided. The power converter comprises a switching circuit configured to receive alternating input voltages, and having switches connected to respective alternating input voltages and controllable to generate an alternating intermediate voltage. Furthermore, the power converter comprises a transmitter and rectifier circuit. For each period of the alternating intermediate voltage, the control scheme comprises the identification with the greatest and second alternating input voltages or greatest and second greatest line-to-line voltages, and then controlling the switching circuit to generate the alternating intermediate voltage based on the identified voltages. The length of the period of the alternating intermediate voltage is then adjusted for subsequent periods of the alternating intermediate voltage based at least in part on a measured value of the output voltage. Accordingly, an output control variable of the power converter (e.g., output voltage, output current, output power) may have a reduced ripple, and thus the power converter may be compatible with variable power loads.To best understand the present disclosure, it is important to understand the operation of power converters to which the disclosed controller and control method may be applied.

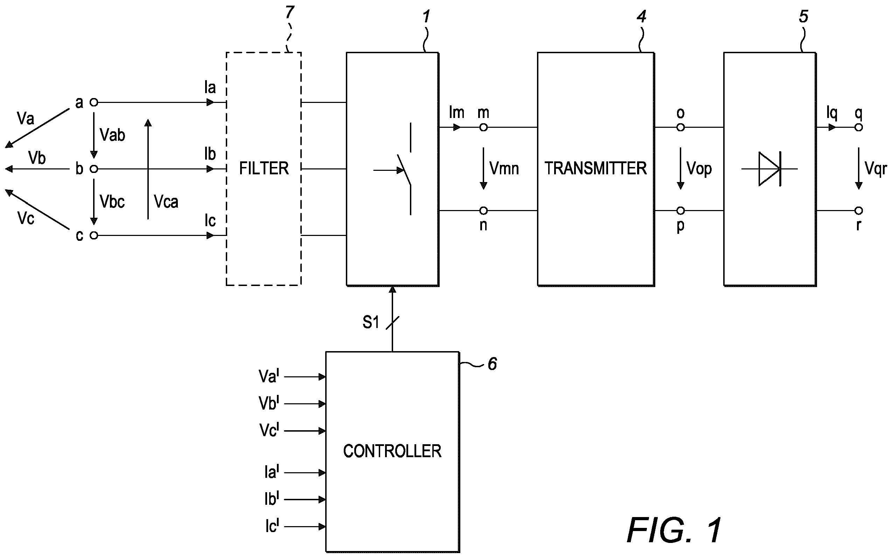

FIG. 1 therefore illustrates one example of a generalised power converter. The power converter includes input nodes a, b, c configured to receive respective input voltages Va, Vb, Vc. The input voltages Va, Vb, Vc are alternating input voltages (e.g., AC voltages). In one example, the input voltages Va, Vb, Vc are three-phase input voltages (e.g., from a grid voltage supply).

The power converter comprises a switching circuit, and is configured to receive the alternating input voltages Va, Vb, Vc, and to provide an output voltage Vmn. The output voltage Vmn is an alternating intermediate voltage (AC or Alternating Current voltage) having a higher frequency than a frequency of the input voltages Va, Vb, Vc. The output voltage Vmn is provided across a high side node m and a low side node n.

More specifically, the switching circuit is a converter that is configured to control input currents la, Ib, Ic received at the respective input nodes a, b, c such that these input currents have pre-defined current waveforms that are dependent on voltage waveforms of the input voltages Va, Vb, Vc. According to one example, the input currents la, Ib, Ic are controlled such that the current waveforms are proportional to the voltage waveforms of the input voltages Va, Vb, Vc. This is achieved by controlling switches of the switching circuit. The switching circuit 1 therefore provides a power factor correction (PFC) function.

In the example illustrated in FIG. 1, the power converter includes three input nodes a, b, c, wherein each of these input nodes a, b, c, is configured to receive a respective alternating input voltage Va, Vb, Vc from a power supply. The alternating input voltages Va, Vb, Vc are referenced to a common circuit node N, such as ground. Note that an alternating voltage as discussed herein means an AC voltage. An alternating current as discussed herein means an AC current.

The switching circuit 1 comprises a plurality of switches. The plurality of switches are connected to the input nodes a, b, c so that the switching circuit 1 may be controlled to generate the alternating output voltage Vmn. Depending on the topology of the switching circuit 1, the switches will be controlled to generate the alternating output voltage Vmn based on the input voltages Va, Vb, Vc, and/or the line-to-line voltages Vab, Vbc, Vca. This will be explained in detail herein further below.

The switches may be bi-directional. For example, each switch may be a single GaN bi-directional switch, or may comprise two MOSFETs in a back-to-back configuration and a dc-block capacitor. Of course, other switch configurations are possible and would be apparent to the skilled person.

The power converter further comprises a transmitter circuit 4 configured to receive the alternating output voltage Vmn from the switching circuit 1. The transmitter circuit 4 is configured to generate a further alternating input voltage Vop based on the alternating intermediate voltage. The transmitter circuit 4 may include a galvanic isolation barrier, and may be configured to transmit electric power associated with the alternating output voltage Vmn over the galvanic isolation barrier provided by the transmitter circuit 4. Nevertheless, this should not be considered limiting, and the invention may still apply to non-isolated topologies of the transmitter circuit 4. In any case, the transmitting power received from the input a, b, c (via the switching circuit 1) by the transmitter circuit 4 is as associated with the further alternating voltage Vop at an output o, p of the transmitter circuit 4.

In some examples, the transmitter circuit 4 may comprise a transformer. The transformer of the transmitter circuit 4 includes a primary winding and a secondary winding. The primary winding may be connected between the input nodes m, n of the transmitter circuit 4, so that the primary winding receives the alternating intermediate voltage Vmn. The secondary winding is inductively coupled with the primary winding.

According to one example, the primary winding and the secondary winding of the transformer may be configured, such that at the secondary winding, a voltage Vop is available that is essentially proportional to the voltage across the primary winding, wherein a proportionality factor between the voltage across the secondary winding and the voltage across the primary winding is given by a ratio Ns/Np between the number of turns Ns of the secondary winding and the number of turns Np of the primary winding.

The turns ratio Ns/Np may be selected such that the voltage Vop across the secondary winding is lower than the voltage across the primary winding. In this example, the power converter operates as a step down converter. According to another example, the turns ratio Ns/Np may be selected such that the voltage Vop across the secondary winding is higher than the voltage across the primary winding. In this example, the power converter operates as a step up converter. According to yet another example, the turns ratio Ns/Np may be 1/1, so that the primary winding and the secondary winding have the same number of turns. In this example, the transmitter circuit 4 merely serves to galvanically isolate the output q, r of the power converter from the input a, b, c of the converter.

In addition, the transmitter circuit 4 may comprise a resonant circuit connected in series with the primary winding of the transformer. In this example, the alternating intermediate voltage Vmn is received by a circuit including the resonant circuit and the primary winding of the transformer. For example, the resonant circuit may include a capacitor connected in series with an inductor. In one example, the inductor may be a discrete inductor connected in series with the primary winding. According to another example, the inductor may be formed by the primary winding, and more specifically by a parasitic inductance of the transformer.

The resonant circuit has a resonant frequency. According to one example, the alternating intermediate voltage Vmn is generated such that its frequency is based on the resonant frequency of the resonant circuit. That is, the switching circuit 1 may be controlled to generate an alternating intermediate voltage Vmn from the alternating input voltages, with a frequency of the alternating intermediate voltage selected based on the predetermined resonant frequency of the resonant circuit. In some embodiments, the frequency of the alternating intermediate voltage Vmn may be slightly greater than that of the resonant frequency of the resonant circuit.

Of course, alternative resonant circuits suitable for the present invention would be immediately apparent and implementable by the skilled person.

Moving on, the power converter further comprises a rectifier circuit 5. The rectifier circuit 5 is configured to rectify the further alternating voltage Vop provided by the transmitter circuit 4. That is, the rectifier circuit 5 is configured to receive the further alternating input voltage Vop, and to generate an output voltage Vqr based on the further alternating intermediate voltage Vop. According to one example, the output voltage Vqr of the rectifier circuit 5 is a direct voltage.

According to one example, the rectifier circuit 5 may be a passive rectifier that includes a rectifier bridge with four passive rectifier elements, such as diodes, and a capacitor connected between the output nodes q, r. Alternatively, the rectifier circuit 5 may include active rectifier elements instead of passive rectifier elements. Each of the active rectifier elements may include a switch and a passive rectifier element, such as a diode, connected in parallel with the respective electronic switch. The switches of the active rectifier may be controlled to provide an output voltage based on the alternating voltage provided to the rectifier circuit 5. The rectifier circuit 5 may thus be a synchronous rectifier (full wave or half wave), which can be controlled using a secondary-only sensing scheme or any suitable synchronous-rectification control scheme.

Of course, alternative rectifier circuits 5 suitable for the present invention would be immediately apparent and implementable by the skilled person.

Furthermore, as illustrated in dashed lines in FIG. 1, the power converter may further include a filter 7 connected between the input a, b, c and the switching circuit 1. The filter 7 may be configured to filter out high-frequency components of the input voltages and input currents that may result from a switched-mode operation of the switching circuit 1.

In one example, the filter 7 may comprise a plurality of inductors, each of the inductors connected in series between a respective one of the inputs and the respective input nodes a, b, c of the switching circuit 1. Furthermore, a capacitor may be connected between each the input nodes a, b, c and the reference node N. Nevertheless, other types and topologies of filters 7 would be appreciated and implemented by the skilled person.

Finally, there is provided a controller 6 for the power converter. The precise operation of the controller 6 depends on the topology of the switching circuit 1. Nevertheless, in general, the controller 6 is configured to control switches of the switching circuit 1 such that an alternating intermediate voltage Vmn is generated across the high side common node m and the low side common node n based on the received alternating input voltages Va, Vb, Vc. Generally, the frequency of the alternating intermediate voltage Vmn will be substantially greater than the frequency of the alternating input voltages Va, Vb, Vc.

The controller 6 that is configured to control operation of the switching circuit 1 based on measured alternating input voltages Va', Vb', Vc'. The control may be further based on measured alternating input currents la', Ib', Ic'. Each of the measured input voltages Va', Vb', Vc' represents a respective one of the input voltages Va, Vb, Vc.

According to one example, each of the measured input voltages Va', Vb', Vc' is proportional to the respective input voltage Va, Vb, Vc. The measured input voltages Va', Vb', Vc' may be generated based on the input voltages Va, Vb, Vc using conventional voltage sensors (not illustrated). Such voltage sensors are commonly known, so that no further explanation is required in this regard. According to one example, the input voltages Va, Vb, Vc and input currents la, Ib, Ic are measured between the filter 7 and the switching circuit 1 in order to obtain the measured input voltages Va', Vb', Vc' and measured input currents la', Ib', Ic'.

Each of the measured input currents la', Ib', Ic' represents a respective one of the input currents Ia, Ib, Ic. According to one example, each of the measured input currents la', Ib', Ic' is proportional to the respective input current la, Ib, Ic. The measured input currents la', Ib', Ic' may be generated based on the input currents Ia, Ib, Ic using conventional current sensors (not illustrated). Such current sensors are commonly known, so that no further explanation is required in this regard.

The controller thus operates switches of the switching circuit 1 to provide an alternating intermediate voltage Vmn at the output m, n of the switching circuit 1 that has a greater frequency than the frequency of the alternating input voltages Va, Vb, Vc. More particularly, the controller controls switches of the switching circuit 1 to selectively connect the alternating input voltages Va, Vb, Vc to the output nodes m, n, in such a way to control the waveform of currents Ia, Ib, Ic to be essentially proportional to the voltage waveforms of the input voltages Va, Vb, Vc. Thus, generating the alternating voltage Vmn includes controlling waveforms of the input currents Ia, Ib, Ic dependent on the measured input voltages Va', Vb', Vc' and optionally the measured input current la', Ib', Ic' in order to control the power factor. The precise usage of the measured input voltages Va', Vb', Vc' (and optionally the measured input current la', Ib', Ic) depends on the topology of the switching circuit 1, and will be described in more detail below.

Accordingly, it is typically the case that the control scheme may only require information available on the primary side. That is, the power converter is devoid of a feedback circuit between the output q, r and the control circuit 6, so that the control circuit 6 controls operation of the switching circuit 1 only based on input parameters (input voltages Va, Vb, Vc and input currents Ia, Ib, Ic) of the power converter. This type of switching circuit may be referred to as a dual active bridge (DAB) cyclo-converter. The switching circuits unregulated output, similar to the DCX approach of DC-DC converters, allows designs that require no feedback from the output. The DAB cyclo-converter may be fully resonant and exhibit zero voltage switching, and are therefore suitable for high frequency operation and take advantage of wide band gap devices. However, they presented a voltage ripple on the output, and a requirement for a subsequent stage.

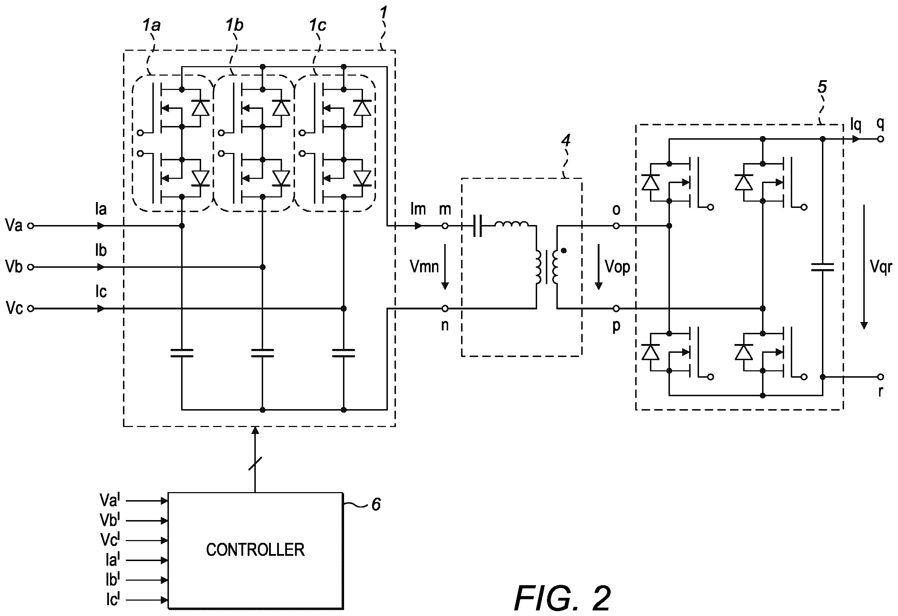

Accordingly, the invention proposes an additional control step in order to reduce a presence of the voltage ripple on the output, thus improving a PFC of the power converter. This will be further described in reference to Fig. 2, in which an example of a switching circuit is provided.

To be clear, the power converter of the present invention regulates the output voltage or current to be constant. The other variable (current in the case that the power converter regulates output voltage, or voltage in the case that the power converter regulates output current) is often constant due to the type of load, and therefore power flow from the input may remain constant. For example, a battery is approximately a constant voltage load, and therefore the power converter may provide a constant power given that it regulates the output current. In the case that the power flow is constant, the three phase network will have a good PFC.

Fig. 2 depicts a power converter comprising an exemplary switching circuit, in the form of a half-bridge. The transmitter circuit 4 comprises a resonant circuit and a transformer, and the rectifier circuit 5 comprises a full-bridge rectifier. Nevertheless, as described above, a different type of transmitter circuit 4, and/or a different type of rectifier circuit 5 may be provided.

As shown, the switching circuit 1 comprises three switches, each switch connected between a respective input node and a high side common node m. In the depicted case, each switch comprises back-to-back MOSFETs and respective diodes in parallel - thus providing a bi-directional switch. Each respective input node a, b, c is configured to receive a respective alternating input voltage Va, Vb, Vc. In addition, the switching circuit 1 comprises three DC-block capacitors, each connected between a respective one of the input nodes and a low side common node n.

The switching circuit 1 thus includes three legs, with each leg comprising a switch and a DC-block capacitor, with an alternating input voltage Va, Vb, Vc provided between the switch and the DC-block capacitor of each leg. Nevertheless, additional legs may be provided. For example, there may be provided an additional leg connected to a reference voltage, such as ground.

Accordingly, the switches can be controlled/operated to generate an alternating intermediate voltage Vmn across the high side common node m and the low side common node n based on the received alternating input voltages Va, Vb, Vc. That is, by selectively opening and closing the switches, different alternating input voltages Va, Vb, Vc may be connected to the high side common node m. For example, if a first switch 1a is closed whilst a second switch 1b and third switch 1c are open, the switching circuit 1 may output the alternating input voltage Va coupled to the input node a of the first switch 1a. Similarly, if the second switch 1b is closed whilst the first and third switches 1a, 1c are open, the switching circuit 1 may output the alternating input voltage Vb coupled to the input node b of the first switch 1b. The switches are opened and closed in a pattern that enables the redistribution of the current of the highest magnitude phase, into the other two lower phases (and with opposite sign), in a time division multiplexing approach.

In an embodiment, for each period of the alternating intermediate voltage Vmn, the alternating input voltage Va, Vb, Vc with the greatest magnitude is identified as a first voltage. The alternating input voltage Va, Vb, Vc with the second greatest magnitude is identified as a second voltage. That is, the alternating input voltages Va, Vb, Vc are sorted based on their magnitude. The switches of the switching circuit 1 are then controlled to generate the alternating intermediate voltage Vmn such that the alternating intermediate voltage Vmn is substantially equal to the first voltage for a first time duration of the period and is substantially equal to the second voltage for a second time duration of the period.

Furthermore, for each period of the alternating intermediate voltage Vmn, the controller 6 may be configured identify the alternating input voltage Va, Vb, Vc with the third greatest magnitude as a third voltage. In this case, the controller 6 is also configured to control the switches of the switching circuit 1 to generate the alternating intermediate voltage Vmn such that the alternating intermediate voltage Vmn is substantially equal to the third voltage for a third time duration of the period.

Typically, the first time duration precedes the second time duration when the first voltage is positive, and the second time duration precedes the first time duration when the first voltage is negative. Accordingly, for every period of the alternating input voltages Va, Vb, Vc (i.e., for each oscillation of the alternating input voltages Va, Vb, Vc), the controller 6 controls the switches to operate in a different pattern for each period of the alternating intermediate voltage Vmn. In cases where the third voltage is identified, the first time duration precedes the second time duration and the second time duration precedes the third time duration when the first voltage is positive, and the second time duration precedes the third time duration, and the third time duration precedes the first time duration when the first voltage is negative.

Furthermore, the first time duration may be substantially equal to half of the period of the alternating intermediate voltage Vmn. In other words, the switch associated with the alternating input voltage of the highest magnitude is closed for half of the period of the alternating intermediate voltage Vmn. Nevertheless, the first time duration may vary from half of the period to operate in non-balanced conditions.

The controller 6 may also be configured to determine the length of the second time duration. This is achieved by calculating a voltage ratio based on the magnitude of the alternating input voltage Va, Vb, Vc with the greatest magnitude and the magnitude of the alternating input voltage Va, Vb, Vc with the second greatest magnitude. A current ratio is also calculated based on a magnitude of a current Ia, Ib, Ic associated with the alternating input voltage Va, Vb, Vc with the greatest magnitude and a magnitude of a current associated with the alternating input voltage with the second greatest magnitude. The second time duration may then be determined based on a difference between the voltage ratio and the current ratio. Ideally, there should not be a difference between the voltage ratio and the current ration, in order for the power factor to be close to unity.

Further, in cases where the third voltage is identified, the controller 6 may calculate the third time duration for each period of the alternating intermediate voltage Vmn based on the first time duration, the second time duration, and the length of the period.

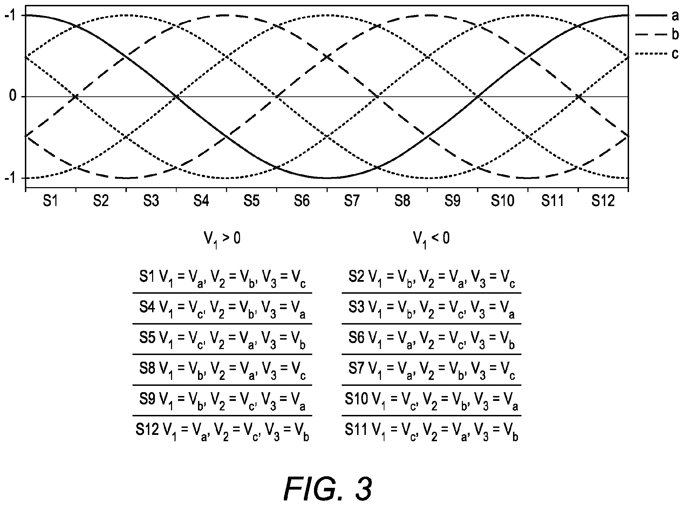

To facilitate understanding of a specific example, the waveforms of the alternating input voltages are depicted in Fig. 3.

As can be seen, for each period of the alternating input voltages Va, Vb, Vc, the controller 6 operates the switches of the switching circuit in twelve different modes. That is, there are six different possible outcomes for the identification of the alternating input voltages Va, Vb, Vc with the greatest and second greatest magnitudes. Then, as described above, the order of the first, second and third time duration changes depending on the polarity of the voltage with the greatest magnitude. Accordingly, the controller 6 controls the switches to be opened and closed in a pattern that enables the redistribution of the current of the highest magnitude phase, into the other two lower phases (and with opposite sign), in twelve different ways during a single period of the alternating input voltages Va, Vb, Vc.

To reiterate, the switching frequency of the switches (and thus the alternating intermediate voltage) is much greater than that of the frequency of the alternating input voltage. For example, the alternating input voltages may have a frequency of 50Hz, whilst the alternating intermediate voltage may have a frequency of 500kHz. Accordingly, the controller 6 may control the switches in a first pattern many times before changing to control the switches in a second pattern, and so on.

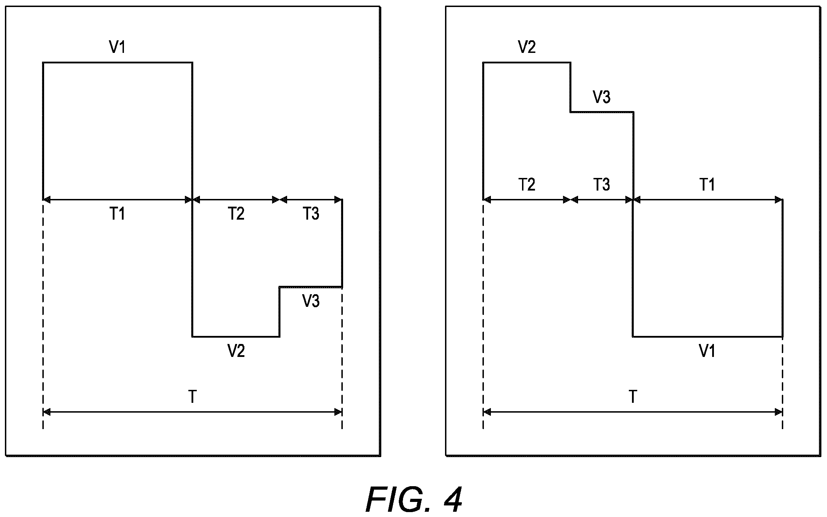

For the sake of completeness, the waveform pattern of the alternating intermediate voltage is depicted in Fig. 4.

This shows that, when the alternating input voltage Va, Vb, Vc with the greatest magnitude is a positive value (i.e., is positively polarized), then firstly the alternating intermediate voltage Vmn is substantially equal to the alternating input voltage Va, Vb, Vc with the greatest magnitude for a first time duration. Next, the alternating intermediate voltage Vmn is substantially equal to the alternating input voltage Va, Vb, Vc with the second greatest magnitude for a second time duration. Then (optionally), the alternating intermediate voltage Vmn is substantially equal to the alternating input voltage Va, Vb, Vc with the third greatest magnitude for a third time duration

When the alternating input voltage Va, Vb, Vc with the greatest magnitude is a negative value (i.e., is negatively polarized), then firstly the alternating intermediate voltage Vmn is substantially equal to the alternating input voltage Va, Vb, Vc with the second greatest magnitude for a second time duration. Next (optionally), the alternating intermediate voltage Vmn is substantially equal to the alternating input voltage Va, Vb, Vc with the third greatest magnitude for a third time duration. Then, the alternating intermediate voltage Vmn is substantially equal to the alternating input voltage Va, Vb, Vc with the greatest magnitude for a first time duration.

To summarize, this control scheme provides a means for controlling the switching circuit 1 using only information gathered/measured from the input of the power converter. At any moment, the current of the highest magnitude phase is redistributed into the other two lower phases (and with opposite sign), in a time division multiplexing approach. However, as noted above, it has been noticed that this results in an undesirable voltage ripple of the alternating intermediate voltage Vmn.

In order to overcome this problem, it is proposed to modulate the switching frequency of the switching circuit 1, as operated by the controller 6. That is, the period T of the alternating intermediate voltage Vmn is modulated in order to improve output stabilization of the power converter.

Specifically, this is achieved by adjusting a length of the period T of the alternating intermediate voltage Vmn based at least in part on a measured value of the output voltage Vqr. The adjustment is applied to the next full period of the alternating intermediate voltage Vmn (i.e., the next time the pattern of switching described in reference to Fig. 4 is applied). Thus, for subsequent periods of the alternating intermediate voltage Vmn, the length of the period T is adjusted based on the measured value of the output voltage Vqr of the power converter.

In some embodiments, the controller 6 is configured to adjust the length of the period T of the alternating intermediate voltage Vmn for an immediately subsequent period of the alternating intermediate voltage Vmn by altering the length of the first time duration. That is, for the next period of the alternating intermediate voltage, the length of the first time duration T1 (i.e., the time during which the alternating intermediate voltage is substantially equal to the alternating input voltage Vmn with the greatest magnitude) is either lengthened or shortened.

More particularly, the controller 6 is configured to increase the length of the period T of the alternating intermediate voltage Vmn for subsequent periods of the alternating intermediate voltage Vmn responsive to the measured value of the output voltage Vqr being greater than a target value of the output voltage Vqr'. Accordingly, if the output voltage Vqr is greater than a target/expected value Vqr', then the controller 6 may increase the length of the period T of the alternating intermediate voltage Vmn. This may have the impact of decreasing the resultant output voltage for subsequent periods of the alternating intermediate voltage Vmn.

Similarly, the controller 6 is configured to decrease the length of the period T of the alternating intermediate voltage Vmn for subsequent periods of the alternating intermediate voltage Vmn responsive to the measured value of the output voltage Vqr being less than the target value of the output voltage Vqr'. Accordingly, if the output voltage is less than a target/expected value, then the controller 6 may decrease the length of the period T of the alternating intermediate voltage Vmn. This may have the impact of increasing the resultant output voltage for subsequent periods of the alternating intermediate voltage Vmn.

It is important to note that the only required feedback is for the voltage regulation, which only requires a small bandwidth (i.e., only measured output voltage information is required). The power factor correction control of the switches (i.e., the pattern control) still does not require any specific measurements from the secondary stage of the power converter. This ultimately results in a reduced cost of the device.

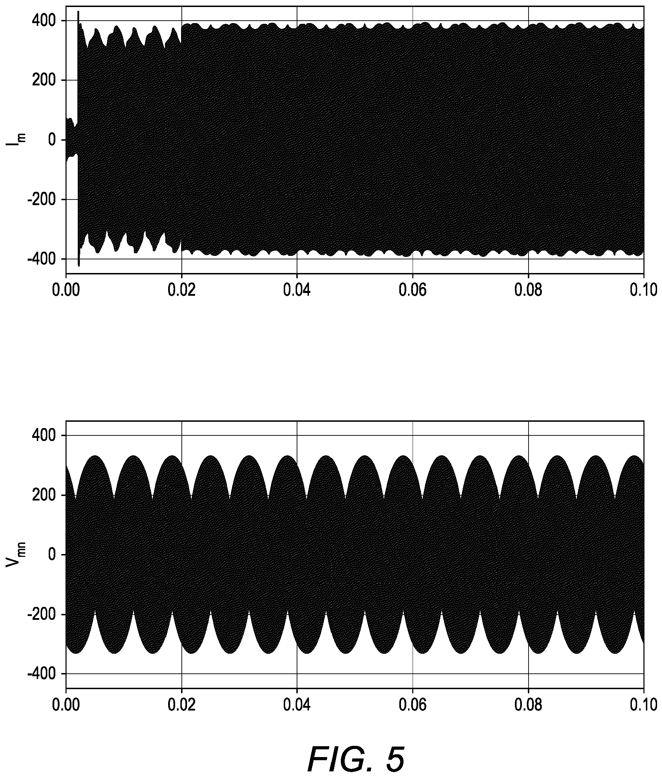

To demonstrate operation of the device of Fig. 2, various waveforms are presented in Figs. 5-7. For those waveforms, a 230V, 50Hz, 3 phase alternating input voltage was provided to the power converter, with a 4kW load connected to the output of the power converter (it should be noted, however, that the constant power load is not a requirement, and a resistive load, constant current or constant voltage load can be equally used). The nominal frequency of the alternating intermediate voltage was 500kHz.

The top graph of Fig. 5 depicts a waveform of the current Im provided by the switching circuit over time. The bottom graph of Fig. 5 depicts a waveform of the voltage Vmn provided by the switching circuit (i.e., the alternating intermediate voltage Vmn). After 0.02 seconds, the controller 6 is prompted to begin period modulation (i.e., adjustment of the length of the period T of the alternating intermediate voltage Vmn). The impact from the input voltages and frequency are visible on the resulting voltage and reflected into the current (as the load power is constant, but it would also be constant due to the regulation). The impact of activating the frequency control is also visible on the shape of the output current Im.

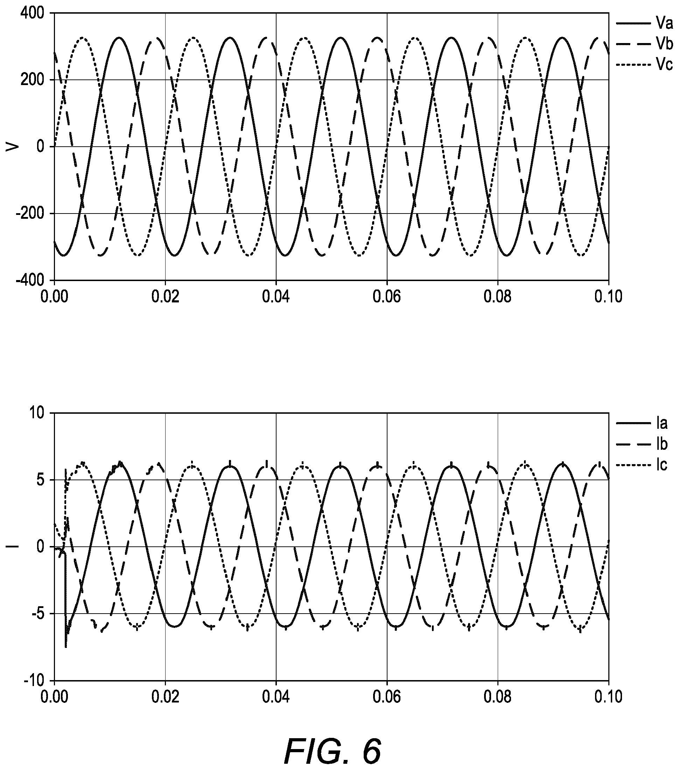

The top graph of Fig. 6 depicts a waveform of the each of the alternating input voltages Va, Vb, Vc. The bottom graph of Fig. 6 depicts a waveform of the current Ia, Ib, Ic associated with each of the alternating input voltages Va, Vb, Vc. Similarly to Fig. 5, after 0.02 seconds, the controller 6 is prompted to begin period modulation (i.e., adjustment of the period of the alternating intermediate voltage Vmn). As can be seen, a ripple of the current Ia, Ib, Ic is greatly reduced, and a power factor is improved.

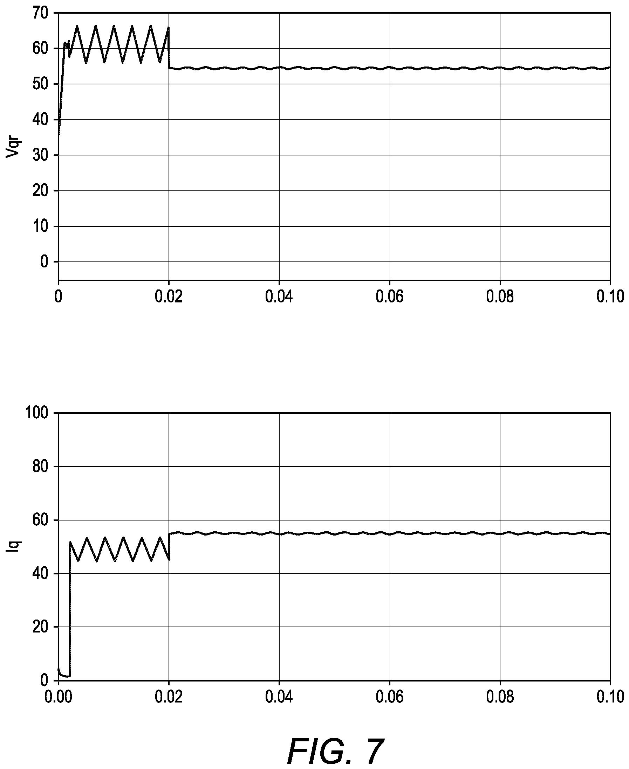

The top graph of Fig. 7 depicts a waveform of the output voltage Vqr of the power converter, whilst the bottom graph of Fig. 7 depicts a waveform of a current Iq associated with the output voltage of the power converter. Similarly to Figs. 5 and 6, after 0.02 seconds, the controller 6 is prompted to begin period modulation (i.e., adjustment of the length/duration of the period T of the alternating intermediate voltage Vmn). Without the frequency control, the output voltage Vqr presents approximately a 15% ripple at full load. However, when frequency control is implemented, the output voltage Vqr presents approximately a 1% ripple. Accordingly, it is clear that the proposed invention provides significant benefits.

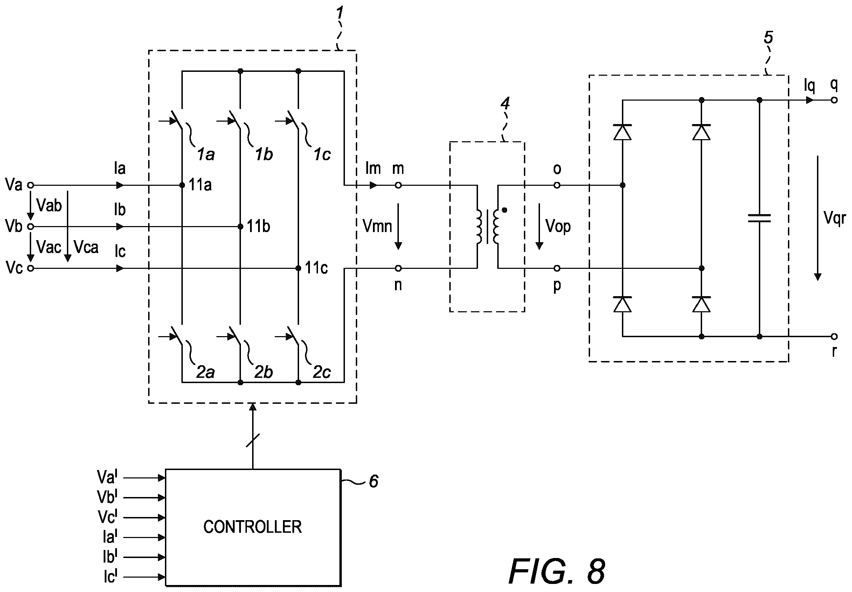

Fig. 8 depicts a power converter comprising another exemplary switching circuit. In contrast to Fig. 2, the switching circuit 1 is provided in the form of a full-bridge, which results in a slightly different way of controlling switches of the switching circuit to provide the same advantages as outlined in Fig. 2. Nevertheless, the general concept of adjusting the length of the period of the alternating intermediate current based (at least in part) on a measured value of the output voltage remains the same.

In the present case, the transmitter circuit 4 simply comprises a transformer. The rectifier circuit 5 comprises four diodes, providing a full-bridge passive rectifier. Nevertheless, as described above, a different type of transmitter circuit 4, and/or a different type of rectifier circuit 5 may be provided.

In contrast to the power converter of Fig. 2, the switching circuit 1 of the power converter depicted in Fig. 8 comprises three high side switches, and three low side switches (rather than any DC-block capacitors). Each of the high side switches is connected between a respective input node a, b, c and a high side common node m. Each respective input node a, b, c is configured to receive a respective alternating input voltage Va, Vb, Vc. Each of the low side switches are connected between a respective one of the input nodes a, b, c and a low side common node n.

In the depicted case, each switch comprises a bi-directional GaN switch, but other switches may be implemented.

The switching circuit 1 thus includes three legs, with each leg comprising a high side switch and a low side switch, with an alternating input voltage Va, Vb, Vc provided between the high side switch and the low side switch of each leg. Nevertheless, additional legs may be provided. For example, there may be provided an additional leg connected to a reference voltage, such as ground.

The high side switches and low side switches can be controlled/operated to generate an alternating intermediate voltage Vmn across the high side common node m and the low side common node n based on the received alternating input voltages Va, Vb, Vc. In this case, the alternating intermediate voltage Vmn is based on line-to-line voltages Vab, Vbc, Vca. That is, by selectively opening and closing the switches, different alternating input voltages Vab, Vbc, Vca may be connected across the output nodes m, n of the switching circuit 1.

For example, a first high side switch 1a, and a third low side switch 2c may be closed, whilst all other switches are open, in order to provide a voltage Vac across nodes m, n. Equally, a third high side switch 1c, and a first low side switch 2a may be closed, whilst all other switches are open, in order to provide a voltage Vca (or negative Vac) across nodes m, n. The switches are thus opened and closed in a pattern that enables the redistribution of the current of the highest magnitude phase, into the other two lower phases (and with opposite sign), in a time division multiplexing approach.

In an embodiment, for each period of the alternating intermediate voltage Vmn, the greatest line-to-line voltage Vab, Vbc, Vca (and -Vab, -Vbc, -Vca) is identified as a first voltage. The second greatest line-to-line voltage Vab, Vbc, Vca (and -Vab, -Vbc, - Vca) is identified as a second voltage. That is, the alternating line-to-line voltages Vab, Vbc, Vca, -Vab, -Vbc, -Vca are sorted based on their magnitude. The switches of the switching circuit 1 are then controlled to generate the alternating intermediate voltage Vmn such that the alternating intermediate voltage Vmn is substantially equal to the first voltage for a first time duration of the period and is substantially equal to the second voltage for a second time duration of the period.

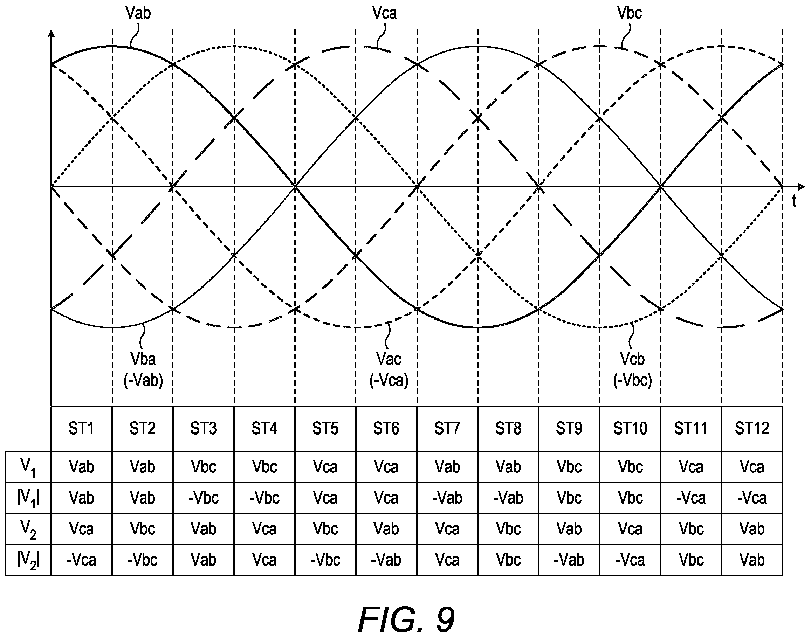

By way of brief explanation, and referring to Fig. 9. the line-to-line voltages Vab, Vbc, Vca are alternating voltages, which includes that the highest line-to-line voltage and the second highest line-to-line voltage change several times over one period of the line-to-line voltages Vab, Vbc, Vca (and the input voltages Va, Vb, Vc), wherein the highest line-to-line voltage is the same for a certain time period and the second highest line-to- line voltage is the same for a certain time period. More specifically, in an input voltage system that includes three sinusoidal input voltages with a mutual phase shift of 120° there are 12 different times segments in each period of the input voltage system such that during each of these 12 different times segments both the highest line-to-line voltage and the second highest line-to-line voltage do not change. These 12 different times segments are also referred to as states of the input voltage system and are labelled with ST1-ST12 in Fig. 9. The duration of each of the 12 states ST1-ST12 is 30° (i.e., 1/12 of one period of the input voltage system).

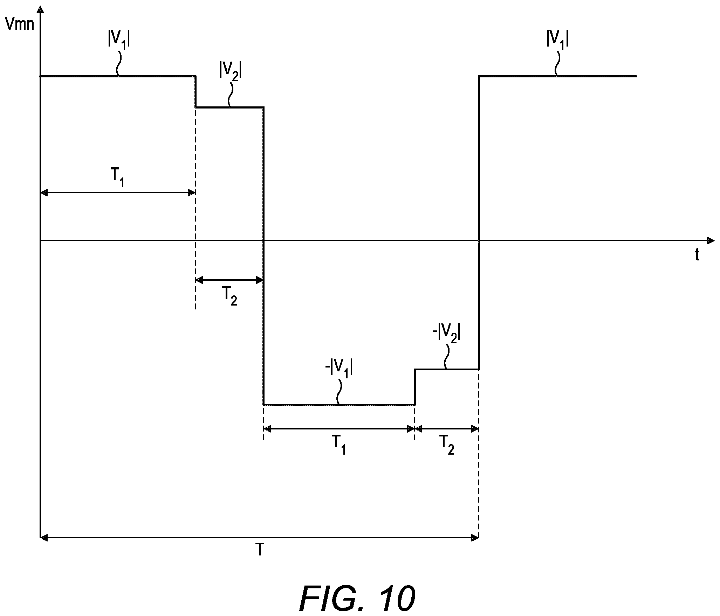

The order of the first time duration and the second time duration, according to one embodiment, is represented in Fig. 10. As shown, the alternating intermediate voltage Vmn is substantially equal to the first voltage for a first time duration, is substantially equal to the second voltage for a second time duration, is substantially equal to an inverse of the first voltage for a third time duration, and is substantially equal to an inverse of the second voltage for a fourth the duration - all within one period of the alternating intermediate voltage. Of course, various modifications may be made to this pattern, and switching delays and settling times may mean that the alternating input voltage may not be exactly equal to these values for the full time durations.

In other words, each period of the alternating intermediate voltage Vmn has a positive half-period and a negative half-period. In the positive half-period, the alternating intermediate voltage Vmn is positive and, in the negative half-period, the alternating intermediate voltage Vmn is negative. Each of the positive half-period and the negative half-period of one period of the alternating intermediate voltage Vmn includes exactly one time segment in which the magnitude equals the highest line-to-line voltage V1 and exactly one time segment in which the magnitude equals the second highest line-to- line voltage. This, however, is only an example. It is also possible to generate the alternating intermediate voltage Vmn such that the positive half-period includes two or more time segments in which the magnitude equals the highest line-to-line voltage and two or more time segments in which the magnitude equals the second highest line- to-line voltage.

In any case, the aim is the distribution of the current of the highest magnitude phase, into the other two lower phases (and with opposite sign), in a time division multiplexing approach. However, as is the case with the power converter of Fig. 2, it has been noticed that this results in an undesirable voltage ripple of the alternating intermediate voltage Vmn.

In order to overcome this problem, the switching frequency of the switching circuit 1 is modulated. That is, the period T of the alternating intermediate voltage Vmn is modulated in order to reduce a voltage ripple at the output of the power converter.

Specifically, this is achieved by adjusting a length of the period T of the alternating intermediate voltage Vmn based at least in part on a measured value of the output voltage Vqr. The adjustment is applied to the next full period of the alternating intermediate voltage Vmn (i.e., the next time the pattern of switching described in reference to Fig. 10 is applied). Thus, for subsequent periods of the alternating intermediate voltage Vmn, the length of the period T is adjusted based on the measured value of the output voltage Vqr of the power converter.

In some embodiments, the controller 6 is configured to adjust the length of the period T of the alternating intermediate voltage Vmn for an immediately subsequent period of the alternating intermediate voltage Vmn by altering the length of the first time duration. That is, for the next period of the alternating intermediate voltage, the length of the first time duration T1 (i.e., the time during which the alternating intermediate voltage is substantially equal to the alternating input voltage Vmn with the greatest magnitude) is either lengthened or shortened.

More particularly, the controller 6 is configured to increase the length of the period T of the alternating intermediate voltage Vmn for subsequent periods of the alternating intermediate voltage Vmn responsive to the measured value of the output voltage Vqr being greater than a target value of the output voltage Vqr'. Accordingly, if the output voltage Vqr is greater than a target/expected value Vqr', then the controller 6 may increase the length of the period T of the alternating intermediate voltage Vmn. This may have the impact of decreasing the resultant output voltage for subsequent periods of the alternating intermediate voltage Vmn.

Similarly, the controller 6 is configured to decrease the length of the period T of the alternating intermediate voltage Vmn for subsequent periods of the alternating intermediate voltage Vmn responsive to the measured value of the output voltage Vqr being less than the target value of the output voltage Vqr'. Accordingly, if the output voltage is less than a target/expected value, then the controller 6 may decrease the length of the period T of the alternating intermediate voltage Vmn. This may have the impact of increasing the resultant output voltage for subsequent periods of the alternating intermediate voltage Vmn.

Accordingly, a ripple of the alternating intermediate voltage Vmn may be reduced, in turn reducing a ripple of the output voltage Vqr of the power converter. Thus, an output stabilization of the power converter is improved, whilst only introducing a simple feedback system.

In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The embodiments may be implemented by means of hardware comprising several distinct elements. In a device claim enumerating several means, several of these means may be embodied by one and the same item of hardware. The mere fact that certain measures are recited in mutually different dependent claims does not indicate that a combination of these measures cannot be used. Furthermore in the appended claims lists comprising "at least one of: A; B; and C" should be interpreted as (A and/or B) and/or C.

Embodiments as discussed herein may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre-stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The following embodiments are disclosed:
1. A controller for a power converter, the power converter comprising:
   a switching circuit, comprising:
      three switches, each switch connected between a respective input node and a high side common node, each respective input node configured to receive a respective alternating input voltage;
      three DC-block capacitors, each connected between a respective one of the input nodes and a low side common node,
      wherein the switches are controlled to generate an alternating intermediate voltage across the high side common node and the low side common node based on the received alternating input voltages;
   a transmitter circuit configured to receive the alternating intermediate voltage, and to generate a further alternating input voltage based on the alternating intermediate voltage; and
   a rectifier circuit configured to receive the further alternating input voltage, and to generate an output voltage based on the alternating intermediate voltage, and wherein the controller is configured, for each period of the alternating intermediate voltage, to:
      identify the alternating input voltage with the greatest magnitude as a first voltage;
      identify the alternating input voltage with the second greatest magnitude as a second voltage;
      control the switches of the Switching circuit to generate the alternating intermediate voltage such that the alternating intermediate voltage is substantially equal to the first voltage for a first time duration of the period and is substantially equal to the second voltage for a second time duration of the period;
      adjust a length of the period of the alternating intermediate voltage for subsequent periods of the alternating intermediate voltage based at least in part on a measured value of the output voltage.
2. The controller of embodiment 1, further configured to adjust the length of the period of the alternating intermediate voltage for an immediately subsequent period of the alternating intermediate voltage by altering the length of the first time duration.
3. The controller of embodiment 1 or 2, configured to adjust the length of the period of the alternating intermediate voltage for subsequent periods of the alternating intermediate voltage based on a comparison between the measured value of the output voltage and a target value of the output voltage.
4. The controller of embodiment 3, configured to:
   increase the length of the period of the alternating intermediate voltage for subsequent periods of the alternating intermediate voltage responsive to the measured value of the output voltage being greater than the target value of the output voltage; and
   decrease the length of the period of the alternating intermediate voltage for subsequent periods of the alternating intermediate voltage responsive to the measured value of the output voltage being less than the target value of the output voltage.
5. The controller of any of embodiments 1-4, wherein the transmitter circuit of the power converter is configured such that the further alternating input voltage is galvanically isolated from the alternating intermediate voltage.
6. The controller of any of embodiments 1-5, wherein the first time duration is substantially equal to half of the period.
7. The controller of any of embodiments 1-6, further configured, for each period of the alternating intermediate voltage, to:
   calculate a voltage ratio based on the magnitude of the first voltage and the magnitude of the second voltage;
   calculate a current ratio based on a magnitude of a current associated with the first voltage and a magnitude of a current associated with the second voltage;
   determine the second time duration based on a difference between the voltage ratio and the current ratio.
8. The controller of any of embodiments 1-7, wherein the first time duration precedes the second time duration when the first voltage is positive, and the second time duration precedes the first time duration when the first voltage is negative.
9. The controller of any of embodiments 1-8, further configured, for each period of the alternating intermediate voltage, to:
   identify the alternating input voltage with the third greatest magnitude as a third voltage; and
   control the switches of the Switching circuit to generate the alternating intermediate voltage such that the alternating intermediate voltage is substantially equal to the third voltage for a third time duration of the period.
10. The controller of embodiment 9, further configured, for each period of the alternating intermediate voltage, to determine the third time duration based on the first time duration, the second time duration, and the length of the period.
11. The controller of embodiment 9 or 10, wherein the first time duration precedes the second time duration and the second time duration precedes the third time duration when the first voltage is positive, and the second time duration precedes the third time duration and the third time duration precedes the first time duration when the first voltage is negative.
12. A controller for a power converter, the power converter comprising:
   a switching circuit, comprising:
      three high side switches, each high side switch connected between a respective input node and a high side common node, each respective input node configured to receive a respective alternating input voltage;
      three low side switches, each connected between a respective one of the input nodes and a low side common node,
      wherein the switches are controlled to generate an alternating intermediate voltage across the high side common node and the low side common node based on the received alternating input voltages;
   a transmitter circuit configured to receive the alternating intermediate voltage, and to generate a further alternating input voltage based on the alternating intermediate voltage; and
   a rectifier circuit configured to receive the further alternating input voltage, and to generate an output voltage based on the alternating intermediate voltage; and
   a controller configured, for each period of the alternating intermediate voltage, to:
   identify a greatest line-to-line voltage between the alternating input voltages as a first voltage;
   identify a second greatest line-to-line voltage between the alternating input voltages as a second voltage;
   control the switches of the Switching circuit to generate the alternating intermediate voltage such that a magnitude of the alternating intermediate voltage is substantially equal to the magnitude of the first voltage for a first time duration of the period and is substantially equal to the magnitude of the second voltage for a second time duration of the period; and
   adjust a length of the period of the alternating intermediate voltage for subsequent periods of the alternating intermediate voltage based at least in part on a measured value of the output voltage.
13. The controller of embodiment 12, further configured to adjust the length of the period of the alternating intermediate voltage for an immediately subsequent period of the alternating intermediate voltage by altering the length of the first time duration.
14. The controller of embodiment 12 or 13, configured to adjust the length of the period of the alternating intermediate voltage for subsequent periods of the alternating intermediate voltage based on a comparison between the measured value of the output voltage and a target value of the output voltage.
15. The controller of embodiment 14, configured to:
   increase the length of the period of the alternating intermediate voltage for subsequent periods of the alternating intermediate voltage responsive to the measured value of the output voltage being greater than the target value of the output voltage; and
   decrease the length of the period of the alternating intermediate voltage for subsequent periods of the alternating intermediate voltage responsive to the measured value of the output voltage being less than the target value of the output voltage.
16. The controller of any of embodiments 12-15, wherein the transmitter circuit of the power converter is configured such that the further alternating input voltage is galvanically isolated from the alternating intermediate voltage.
17. The controller of any of embodiments 12-16, further configured to determine the first time duration based on the alternating input voltage with the greatest magnitude and an associated input current.
18. The controller of any of embodiments 12-17, further configured to control the switches of the Switching circuit to generate the alternating intermediate voltage such that a magnitude of the alternating intermediate voltage is substantially equal to zero for a third time duration of the period.
19. A method for controlling a power converter, the power converter comprising:
   a switching circuit, comprising:
      three switches, each switch connected between a respective input node and a high side common node, each respective input node configured to receive a respective alternating input voltage;
      three DC-block capacitors, each connected between a respective one of the input nodes and a low side common node,
      wherein the switches are controlled to generate an alternating intermediate voltage across the high side common node and the low side common node based on the received alternating input voltages;
   a transmitter circuit configured to receive the alternating intermediate voltage, and to generate a further alternating input voltage based on the alternating intermediate voltage; and
   a rectifier circuit configured to receive the further alternating input voltage, and to generate an output voltage based on the alternating intermediate voltage,
   the method comprising, for each period of the alternating intermediate voltage:
      identifying the alternating input voltage with the greatest magnitude as a first voltage;
      identifying the alternating input voltage with the second greatest magnitude as a second voltage;
      controlling the switches of the Switching circuit to generate the alternating intermediate voltage such that the alternating intermediate voltage is substantially equal to the first voltage for a first time duration of the period and is substantially equal to the second voltage for a second time duration of the period; adjust a length of a period of the alternating intermediate voltage for subsequent periods of the alternating intermediate voltage based at least in part on a measured value of the output voltage.
20. A method for controlling a power converter, the power converter comprising:
   a switching circuit, comprising:
      three high side switches, each high side switch connected between a respective input node and a high side common node, each respective input node configured to receive a respective alternating input voltage;
      three low side switches, each connected between a respective one of the input nodes and a low side common node,
      wherein the switches are controlled to generate an alternating intermediate voltage across the high side common node and the low side common node based on the received alternating input voltages;
   a transmitter circuit configured to receive the alternating intermediate voltage, and to generate a further alternating input voltage based on the alternating intermediate voltage; and
   a rectifier circuit configured to receive the further alternating input voltage, and to generate an output voltage based on the alternating intermediate voltage; and the method comprising, for each period of the alternating intermediate voltage:
      identifying a greatest line-to-line voltage between the alternating input voltages as a first voltage;
      identifying a second greatest line-to-line voltage between the alternating input voltages as a second voltage;
      controlling the switches of the Switching circuit to generate the alternating intermediate voltage such that a magnitude of the alternating intermediate voltage is substantially equal to the magnitude of the first voltage for a first time duration of the period and is substantially equal to the magnitude of the second voltage for a second time duration of the period; and
      adjusting a length of the period of the alternating intermediate voltage for subsequent periods of the alternating intermediate voltage based at least in part on a measured value of the output voltage.

## Claims

1. A controller (6) for a power converter, the power converter comprising:
a switching circuit (1), comprising:
three switches (1a, 1b, 1c), each switch connected between a respective input node and a high side common node (m), each respective input node configured to receive a respective alternating input voltage (Va, Vb, Vc);
three DC-block capacitors, each connected between a respective one of the input nodes and a low side common node (n),
wherein the switches are controlled to generate an alternating intermediate voltage (Vmn) across the high side common node and the low side common node based on the received alternating input voltages;
a transmitter circuit (4) configured to receive the alternating intermediate voltage, and to generate a further alternating input voltage (Vop) based on the alternating intermediate voltage; and
a rectifier circuit (5) configured to receive the further alternating input voltage, and to generate an output voltage (Vqr) based on the alternating intermediate voltage, and
wherein the controller is configured, for each period (T) of the alternating intermediate voltage, to:
identify the alternating input voltage with the greatest magnitude as a first voltage (V1);
identify the alternating input voltage with the second greatest magnitude as a second voltage (V2);
control the switches of the switching circuit to generate the alternating intermediate voltage such that the alternating intermediate voltage is substantially equal to the first voltage for a first time duration (T1) of the period and is substantially equal to the second voltage for a second time duration (T2) of the period; and
adjust a length of the period of the alternating intermediate voltage for subsequent periods of the alternating intermediate voltage based at least in part on a measured value of the output voltage.

2. The controller of claim 1, further configured to adjust the length of the period (T) of the alternating intermediate voltage (Vmn) for an immediately subsequent period of the alternating intermediate voltage by altering the length of the first time duration (T1).

3. The controller of claim 1 or 2, configured to adjust the length of the period (T) of the alternating intermediate voltage (Vmn) for subsequent periods of the alternating intermediate voltage based on a comparison between the measured value of the output voltage (Vqr) and a target value of the output voltage (Vqr').

4. The controller of claim 3, configured to:
increase the length of the period (T) of the alternating intermediate voltage (Vmn) for subsequent periods of the alternating intermediate voltage responsive to the measured value of the output voltage (Vqr) being greater than the target value of the output voltage (Vqr'); and
decrease the length of the period of the alternating intermediate voltage for subsequent periods of the alternating intermediate voltage responsive to the measured value of the output voltage being less than the target value of the output voltage.

5. The controller of any of claims 1-4, wherein the transmitter circuit (4) of the power converter is configured such that the further alternating input voltage (Vop) is galvanically isolated from the alternating intermediate voltage (Vmn).

6. The controller of any of claims 1-5, further configured, for each period (T) of the alternating intermediate voltage (Vmn), to:
calculate a voltage ratio based on the magnitude of the first voltage (V1) and the magnitude of the second voltage (V2);
calculate a current ratio based on a magnitude of a current associated with the first voltage and a magnitude of a current associated with the second voltage;
determine the second time duration (T2) based on a difference between the voltage ratio and the current ratio.

7. The controller of any of claims 1-6, further configured, for each period (T) of the alternating intermediate voltage (Vmn), to:
identify the alternating input voltage (Va, Vb, Vc) with the third greatest magnitude as a third voltage (V3); and
control the switches of the switching circuit (1) to generate the alternating intermediate voltage such that the alternating intermediate voltage is substantially equal to the third voltage for a third time duration (T3) of the period.

8. A controller (6) for a power converter, the power converter comprising:
a switching circuit (1), comprising:
three high side switches (1a, 1b, 1c), each high side switch connected between a respective input node and a high side common node (m), each respective input node configured to receive a respective alternating input voltage (Va, Vb, Vc);
three low side switches (2a, 2b, 2c), each connected between a respective one of the input nodes and a low side common node (n),
wherein the switches are controlled to generate an alternating intermediate voltage (Vmn) across the high side common node and the low side common node based on the received alternating input voltages;
a transmitter circuit (4) configured to receive the alternating intermediate voltage, and to generate a further alternating input voltage (Vop) based on the alternating intermediate voltage; and
a rectifier circuit (5) configured to receive the further alternating input voltage, and to generate an output voltage (Vqr) based on the alternating intermediate voltage; and
wherein the controller is configured, for each period (T) of the alternating intermediate voltage, to:
identify a greatest line-to-line voltage between the alternating input voltages as a first voltage (V1);
identify a second greatest line-to-line voltage between the alternating input voltages as a second voltage (V2);
control the switches of the switching circuit to generate the alternating intermediate voltage such that a magnitude of the alternating intermediate voltage is substantially equal to the magnitude of the first voltage for a first time duration (T1) of the period, and is substantially equal to the magnitude of the second voltage for a second time duration (T2) of the period; and
adjust a length of the period of the alternating intermediate voltage for subsequent periods of the alternating intermediate voltage based at least in part on a measured value of the output voltage.

9. The controller of claim 8, further configured to adjust the length of the period (T) of the alternating intermediate voltage (Vmn) for an immediately subsequent period of the alternating intermediate voltage by altering the length of the first time duration (T1).

10. The controller of claim 8 or 9, configured to adjust the length of the period (T) of the alternating intermediate voltage (Vmn) for subsequent periods of the alternating intermediate voltage based on a comparison between the measured value of the output voltage (Vqr) and a target value of the output voltage (Vqr').

11. The controller of claim 10, configured to:
increase the length of the period (T) of the alternating intermediate voltage (Vmn) for subsequent periods of the alternating intermediate voltage responsive to the measured value of the output voltage (Vqr) being greater than the target value of the output voltage (Vqr'); and
decrease the length of the period of the alternating intermediate voltage for subsequent periods of the alternating intermediate voltage responsive to the measured value of the output voltage being less than the target value of the output voltage.

12. The controller of any of claims 8-11, wherein the transmitter circuit (4) of the power converter is configured such that the further alternating input voltage (Vop) is galvanically isolated from the alternating intermediate voltage (Vmn).

13. The controller of any of claims 8-12, further configured to control the switches of the switching circuit (1) to generate the alternating intermediate voltage (Vmn) such that a magnitude of the alternating intermediate voltage is substantially equal to zero for a third time duration (T3) of the period (T).

14. A method for controlling a power converter, the power converter comprising:
a switching circuit (1), comprising:
three switches (1a, 1b, 1c), each switch connected between a respective input node and a high side common node (m), each respective input node configured to receive a respective alternating input voltage (Va, Vb, Vc);
three DC-block capacitors, each connected between a respective one of the input nodes and a low side common node (n),
wherein the switches are controlled to generate an alternating intermediate voltage (Vmn) across the high side common node and the low side common node based on the received alternating input voltages;
a transmitter circuit (4) configured to receive the alternating intermediate voltage, and to generate a further alternating input voltage (Vop) based on the alternating intermediate voltage; and
a rectifier circuit (5) configured to receive the further alternating input voltage, and to generate an output voltage (Vqr) based on the alternating intermediate voltage,
the method comprising, for each period (T) of the alternating intermediate voltage:
identifying the alternating input voltage with the greatest magnitude as a first voltage (V1);
identifying the alternating input voltage with the second greatest magnitude as a second voltage (V2);
controlling the switches of the switching circuit to generate the alternating intermediate voltage such that the alternating intermediate voltage is substantially equal to the first voltage for a first time duration (T1) of the period and is substantially equal to the second voltage for a second time duration (T2) of the period;
adjusting a length of a period of the alternating intermediate voltage for subsequent periods of the alternating intermediate voltage based at least in part on a measured value of the output voltage.

15. A method for controlling a power converter, the power converter comprising:
a switching circuit (1), comprising:
three high side switches (1a, 1b, 1c), each high side switch connected between a respective input node and a high side common node (m), each respective input node configured to receive a respective alternating input voltage (Va, Vb, Vc);
three low side switches (2a, 2b, 2c), each connected between a respective one of the input nodes and a low side common node (n),
wherein the switches are controlled to generate an alternating intermediate voltage (Vmn) across the high side common node and the low side common node based on the received alternating input voltages;
a transmitter circuit (4) configured to receive the alternating intermediate voltage, and to generate a further alternating input voltage (Vop) based on the alternating intermediate voltage; and
a rectifier circuit (5) configured to receive the further alternating input voltage, and to generate an output voltage (Vqr) based on the alternating intermediate voltage,
the method comprising, for each period (T) of the alternating intermediate voltage:
identifying a greatest line-to-line voltage between the alternating input voltages as a first voltage (V1);
identifying a second greatest line-to-line voltage between the alternating input voltages as a second voltage (V2);
controlling the switches of the switching circuit to generate the alternating intermediate voltage such that a magnitude of the alternating intermediate voltage is substantially equal to the magnitude of the first voltage for a first time duration (T1) of the period and is substantially equal to the magnitude of the second voltage for a second time duration (T2) of the period; and
adjusting a length of the period of the alternating intermediate voltage for subsequent periods of the alternating intermediate voltage based at least in part on a measured value of the output voltage.

## Amended claims

### Amended claims in accordance with Rule 137(2) EPC.

1. A controller (6) for a power converter, the power converter comprising:
a switching circuit (1), comprising:
three switches (1a, 1b, 1c), each switch connected between a respective input node and a high side common node (m), each respective input node configured to receive a respective alternating input voltage (Va, Vb, Vc);
three DC-block capacitors, each connected between a respective one of the input nodes and a low side common node (n),
wherein the switches are controlled to generate an alternating intermediate voltage (Vmn) across the high side common node and the low side common node based on the received alternating input voltages, wherein a frequency of the alternating intermediate voltage is much greater than a frequency of the alternating intermediate voltages;
a transmitter circuit (4) configured to receive the alternating intermediate voltage, and to generate a further alternating input voltage (Vop) based on the alternating intermediate voltage; and
a rectifier circuit (5) configured to receive the further alternating input voltage, and to generate an output voltage (Vqr) based on the alternating intermediate voltage, and
wherein the controller is configured, for each period (T) of the alternating intermediate voltage, to:
identify the alternating input voltage with the greatest magnitude as a first voltage (V1);
identify the alternating input voltage with the second greatest magnitude as a second voltage (V2);
calculate a voltage ratio based on the magnitude of the first voltage and the magnitude of the second voltage;
calculate a current ratio based on a magnitude of a current (Ia, Ib, Ic) associated with the alternating input voltage identified as the first voltage and a magnitude of a current associated with the alternating input voltage identified as the second voltage;
determine a second time duration (T2) of the period based on a difference between the voltage ratio and the current ratio;
control the switches of the switching circuit to generate the alternating intermediate voltage such that the alternating intermediate voltage is substantially equal to the first voltage for a first time duration (T1) of the period and is substantially equal to the second voltage for the second time duration of the period; and
adjust a length of the period of the alternating intermediate voltage for subsequent periods of the alternating intermediate voltage based at least in part on a measured value of the output voltage.

2. The controller of claim 1, further configured to adjust the length of the period (T) of the alternating intermediate voltage (Vmn) for an immediately subsequent period of the alternating intermediate voltage by altering the length of the first time duration (T1).

3. The controller of claim 1 or 2, configured to adjust the length of the period (T) of the alternating intermediate voltage (Vmn) for subsequent periods of the alternating intermediate voltage based on a comparison between the measured value of the output voltage (Vqr) and a target value of the output voltage (Vqr').

4. The controller of claim 3, configured to:
increase the length of the period (T) of the alternating intermediate voltage (Vmn) for subsequent periods of the alternating intermediate voltage responsive to the measured value of the output voltage (Vqr) being greater than the target value of the output voltage (Vqr'); and
decrease the length of the period of the alternating intermediate voltage for subsequent periods of the alternating intermediate voltage responsive to the measured value of the output voltage being less than the target value of the output voltage.

5. The controller of any of claims 1-4, wherein the transmitter circuit (4) of the power converter is configured such that the further alternating input voltage (Vop) is galvanically isolated from the alternating intermediate voltage (Vmn).

6. The controller of any of claims 1-5, further configured, for each period (T) of the alternating intermediate voltage (Vmn), to:
identify the alternating input voltage (Va, Vb, Vc) with the third greatest magnitude as a third voltage (V3); and
control the switches of the switching circuit (1) to generate the alternating intermediate voltage such that the alternating intermediate voltage is substantially equal to the third voltage for a third time duration (T3) of the period.

7. A controller (6) for a power converter, the power converter comprising:
a switching circuit (1), comprising:
three high side switches (1a, 1b, 1c), each high side switch connected between a respective input node and a high side common node (m), each respective input node configured to receive a respective alternating input voltage (Va, Vb, Vc);
three low side switches (2a, 2b, 2c), each connected between a respective one of the input nodes and a low side common node (n),
wherein the switches are controlled to generate an alternating intermediate voltage (Vmn) across the high side common node and the low side common node based on the received alternating input voltages, wherein a frequency of the alternating intermediate voltage is much greater than a frequency of the alternating intermediate voltages;
a transmitter circuit (4) configured to receive the alternating intermediate voltage, and to generate a further alternating input voltage (Vop) based on the alternating intermediate voltage; and
a rectifier circuit (5) configured to receive the further alternating input voltage, and to generate an output voltage (Vqr) based on the alternating intermediate voltage; and
wherein the controller is configured, for each period (T) of the alternating intermediate voltage, to:
identify a greatest line-to-line voltage between the alternating input voltages as a first voltage (V1);
identify a second greatest line-to-line voltage between the alternating input voltages as a second voltage (V2);
calculate a voltage ratio based on the magnitude of the first voltage and the magnitude of the second voltage;
calculate a current ratio based on a magnitude of a current associated with the line-to-line voltage identified as the first voltage and a magnitude of a current associated with the line-to-line voltage identified as the second voltage;
determine a second time duration (T2) of the period based on a difference between the voltage ratio and the current ratio;
control the switches of the switching circuit to generate the alternating intermediate voltage such that a magnitude of the alternating intermediate voltage is substantially equal to the magnitude of the first voltage for a first time duration (T1) of the period, and is substantially equal to the magnitude of the second voltage for the second time duration of the period; and
adjust a length of the period of the alternating intermediate voltage for subsequent periods of the alternating intermediate voltage based at least in part on a measured value of the output voltage.

8. The controller of claim 7, further configured to adjust the length of the period (T) of the alternating intermediate voltage (Vmn) for an immediately subsequent period of the alternating intermediate voltage by altering the length of the first time duration (T1).

9. The controller of claim 7 or 8, configured to adjust the length of the period (T) of the alternating intermediate voltage (Vmn) for subsequent periods of the alternating intermediate voltage based on a comparison between the measured value of the output voltage (Vqr) and a target value of the output voltage (Vqr').

10. The controller of claim 9, configured to:
increase the length of the period (T) of the alternating intermediate voltage (Vmn) for subsequent periods of the alternating intermediate voltage responsive to the measured value of the output voltage (Vqr) being greater than the target value of the output voltage (Vqr'); and
decrease the length of the period of the alternating intermediate voltage for subsequent periods of the alternating intermediate voltage responsive to the measured value of the output voltage being less than the target value of the output voltage.

11. The controller of any of claims 7-10, wherein the transmitter circuit (4) of the power converter is configured such that the further alternating input voltage (Vop) is galvanically isolated from the alternating intermediate voltage (Vmn).

12. The controller of any of claims 7-11, further configured to control the switches of the switching circuit (1) to generate the alternating intermediate voltage (Vmn) such that a magnitude of the alternating intermediate voltage is substantially equal to zero for a third time duration (T3) of the period (T).

13. A method for controlling a power converter, the power converter comprising:
a switching circuit (1), comprising:
three switches (1a, 1b, 1c), each switch connected between a respective input node and a high side common node (m), each respective input node configured to receive a respective alternating input voltage (Va, Vb, Vc);
three DC-block capacitors, each connected between a respective one of the input nodes and a low side common node (n),
wherein the switches are controlled to generate an alternating intermediate voltage (Vmn) across the high side common node and the low side common node based on the received alternating input voltages, wherein a frequency of the alternating intermediate voltage is much greater than a frequency of the alternating intermediate voltages;
a transmitter circuit (4) configured to receive the alternating intermediate voltage, and to generate a further alternating input voltage (Vop) based on the alternating intermediate voltage; and
a rectifier circuit (5) configured to receive the further alternating input voltage, and to generate an output voltage (Vqr) based on the alternating intermediate voltage,
the method comprising, for each period (T) of the alternating intermediate voltage:
identifying the alternating input voltage with the greatest magnitude as a first voltage (V1);
identifying the alternating input voltage with the second greatest magnitude as a second voltage (V2);
calculate a voltage ratio based on the magnitude of the first voltage and the magnitude of the second voltage;
calculate a current ratio based on a magnitude of a current (Ia, Ib, Ic) associated with the alternating input voltage identified as the first voltage and a magnitude of a current associated with the alternating input voltage identified as the second voltage;
determine a second time duration (T2) of the period based on a difference between the voltage ratio and the current ratio;
controlling the switches of the switching circuit to generate the alternating intermediate voltage such that the alternating intermediate voltage is substantially equal to the first voltage for a first time duration (T1) of the period and is substantially equal to the second voltage for the second time duration of the period;
adjusting a length of a period of the alternating intermediate voltage for subsequent periods of the alternating intermediate voltage based at least in part on a measured value of the output voltage.

14. A method for controlling a power converter, the power converter comprising:
a switching circuit (1), comprising:
three high side switches (1a, 1b, 1c), each high side switch connected between a respective input node and a high side common node (m), each respective input node configured to receive a respective alternating input voltage (Va, Vb, Vc);
three low side switches (2a, 2b, 2c), each connected between a respective one of the input nodes and a low side common node (n),
wherein the switches are controlled to generate an alternating intermediate voltage (Vmn) across the high side common node and the low side common node based on the received alternating input voltages, wherein a frequency of the alternating intermediate voltage is much greater than a frequency of the alternating intermediate voltages;
a transmitter circuit (4) configured to receive the alternating intermediate voltage, and to generate a further alternating input voltage (Vop) based on the alternating intermediate voltage; and
a rectifier circuit (5) configured to receive the further alternating input voltage, and to generate an output voltage (Vqr) based on the alternating intermediate voltage,
the method comprising, for each period (T) of the alternating intermediate voltage:
identifying a greatest line-to-line voltage between the alternating input voltages as a first voltage (V1);
identifying a second greatest line-to-line voltage between the alternating input voltages as a second voltage (V2);
calculate a voltage ratio based on the magnitude of the first voltage and the magnitude of the second voltage;
calculate a current ratio based on a magnitude of a current associated with the line-to-line voltage identified as the first voltage and a magnitude of a current associated with the line-to-line voltage identified as the second voltage;
determine a second time duration (T2) of the period based on a difference between the voltage ratio and the current ratio;
controlling the switches of the switching circuit to generate the alternating intermediate voltage such that a magnitude of the alternating intermediate voltage is substantially equal to the magnitude of the first voltage for a first time duration (T1) of the period and is substantially equal to the magnitude of the second voltage for the second time duration of the period; and
adjusting a length of the period of the alternating intermediate voltage for subsequent periods of the alternating intermediate voltage based at least in part on a measured value of the output voltage.
